# EUROPEAN PATENT APPLICATION

(11) **EP 2 590 388 A1**
(43) Date of publication of application: **08.05.2013**
(21) Application number: 12191469.1
(22) Date of filing: 06.11.2012
(51) Int. Cl.: H04M 1/23, H04M 1/02

(54) **Keypad coupling device for portable terminal**

(30) Priority: 07.11.2011 KR 20110115113
(71) Applicant: Samsung Electronics Co., Ltd, Gyeonggi-do 443-742 (KR)
(72) Inventor: Seo, Chang-Yong, 443-742 Gyeonggi-do, (KR)
(74) Representative: Hylarides, Paul Jacques

(57) **Abstract**

A keypad coupling device for a portable terminal which includes a housing and a display unit bracket coupled to the housing. The bracket acts as a supporting devce for the keypad. The keypad is coupled and fixed via a male female mechanism to the display unit bracket. The keypad coupling device minimizes a thickness of a space of a portable terminal in which a keypad is coupled and allows a size of the keypad mounted in the portable terminal to be widened.

## Description

### BACKGROUND OF THE INVENTION

### Field of the Invention

The present invention relates to keypad functionality of a portable terminal. More particularly, the present invention relates to a keypad coupling device which is one of input devices for a portable communication terminal.

### Description of the Related Art

Generally, a portable terminal refers to an electronic device which allows a user to perform a communication function such as voice communication or message transmission, such as text or video, and enjoy a multimedia service such as storage of various information, play of games, and watching of moving images. In particular, with the integration of a note or multimedia function into a portable terminal coupled with Internet access, a user can enjoy various contents such as a banking service, a game/multimedia service, a wireless Internet service, and the like as well as voice communication through the portable terminal.

Although a typical portable terminal can perform voice communication or short message generation merely with a keypad including keys for inputting numbers, send/end keys, a menu key, and a shift key, a terminal having a keypad such as a QWERTY key has emerged with integration of various functions into the portable terminal.

Meanwhile, there is a problem in the art in that it is difficult to secure a sufficiently large keypad area while minimizing the size of a terminal in terms of portability. Users desire portability and convenience as reasons for purchasing such portable terminals, but the increased keyboard size that would facilitate typing a text message or operating some other feature is viewed as being less important to users than portability.

Techniques regarding the keypad are disclosed in Korean Patent Publication No. 10-2008-0040915 (published on May 9, 2008 and entitled "Keypad Coupling Structure for Portable Terminal"), Korean Patent Publication No. 10-2006-0119546 (published on November 24, 2006 and entitled "Keypad Having Protection Protrusion Portion and Method for Manufacturing the Same"), etc.

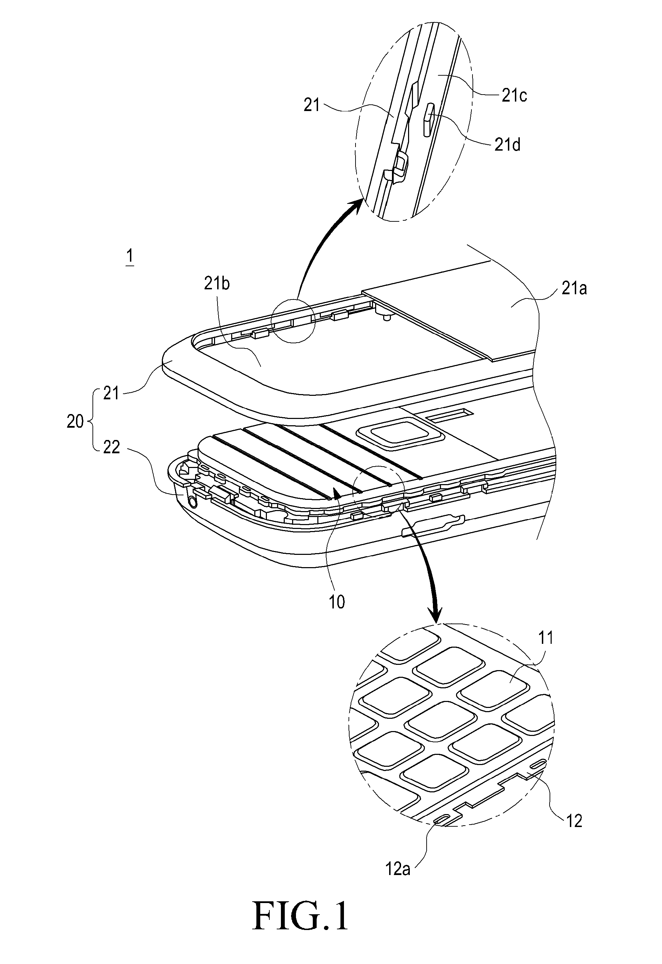

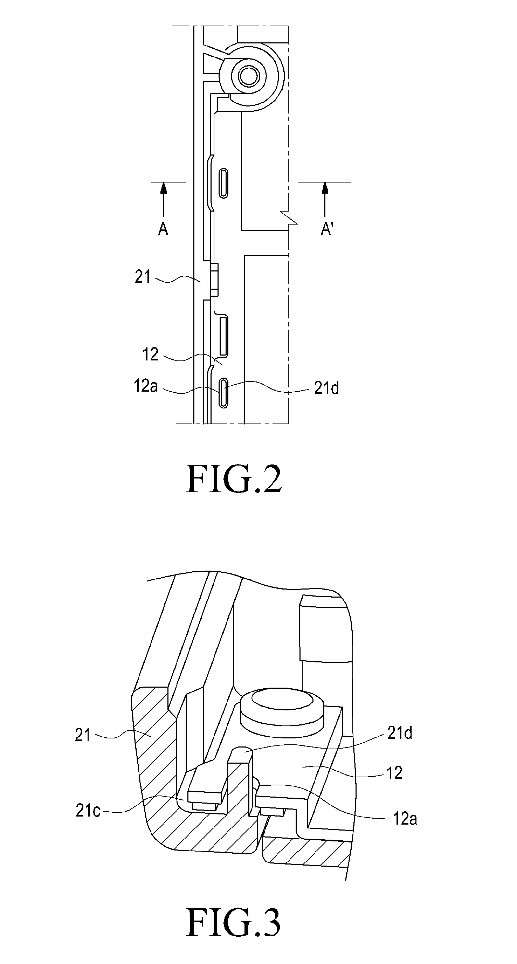

FIGs. 1 through 4 are diagrams showing a keypad assembly structure for a portable terminal according to a conventional portable terminal device. Referring now to FIGs. 1 through 4, a keypad assembly 1 according to the conventional art includes a keypad 11 and a housing 20 in which the keypad 11 is placed/arranged. The keypad 11, which is made of a rubber material, has a plurality of key tops 11a on a top portion thereof and has an extension plate 12 extending laterally to be engaged with a circumferential portion of front case 21 of the housing 20. Extension plate 12 has a hole 12a formed thereininto which a protrusion 21d (to be described below) is inserted and fixed.

The keypad 11 is disposed between the front case 21 and a rear case 22 of the housing 20. On the front case 21 are formed a keypad seating portion 21b in which the keypad 11 is mounted and a window mounting portion 21a on which a display unit 30 is mounted. The keypad seating portion 21b includes a support surface 21c extending along an inner circumference of the front case 21 to receive the keypad 11 and the protrusion 21d protruding on the support surface 21c for insertion into the hole 12a. Once the keypad 11 is seated in the keypad seating portion 21b, the extension plate 12 is placed on the support surface 21c and the protrusion 21d protruding from the support surface 21c is bound to the hole 12a by passing through the hole 12a.

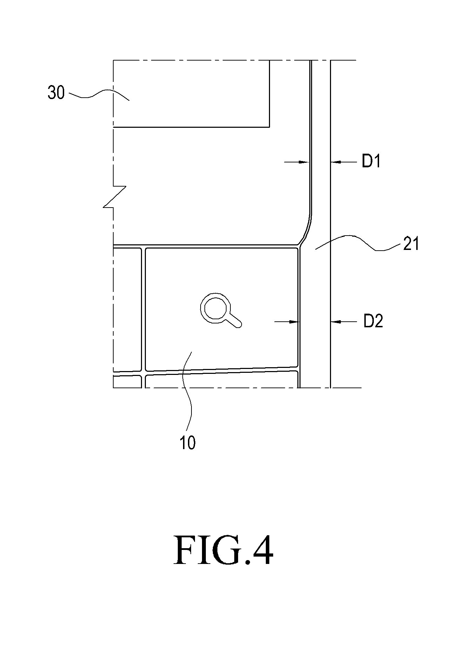

In the front case 21, receiving spaces for the support surface 21d and the protrusion 21d for seating and fixing the keypad 11 are secured. Therefore, with particular reference to FIG. 4, even if the thicknesses of the support surface 21d and the protrusion 21d are minimized, a thickness D2 corresponding to the receiving spaces for seating and fixing the keypad 11 is required at the circumference of the front case 21.

For the aforementioned reasons, with continued reference to FIG. 4, the thickness D2 of an outer frame 21 provided in the keypad seating portion 21b is formed larger than a thickness D1 of the outer frame 21 provided in the window mounting portion 21a.

In addition, the extension plate 12 is also provided on the circumferential portion of the keypad 11, such that a mounting space for the key tops 11a is reduced on the keypad 11 by a space occupied by the extension plate 12.

As can be seen in FIG. 4, due to a difference between the thickness D1 of the outer frame 21 provided in the window mounting portion 21 and the thickness D2 of the outer frame 21 provided in the keypad seating portion 21b, a curve is generated along the outline of the front case 21, such that unity in terms of design degrades and restrictions are imposed on the design of the front case 21.

### SUMMARY OF THE INVENTION

Accordingly, the present invention provides a keypad coupling device for a portable terminal that minimizes a thickness of a space of a portable terminal in which a keypad is coupled and allows a size of the keypad mounted in the portable terminal to be widened.

In addition, the present invention also provides a keypad coupling device for a portable terminal that makes the design of a front case elegant and diversifies the design of the front case, by preventing generation of a thickness difference between an outer frame provided in a window mounting portion and an outer frame provided in a keypad seating portion.

According to an exemplary aspect of the present invention, there is provided a keypad coupling device for a portable terminal which includes a housing and a display unit bracket coupled to the housing, in which the keypad is coupled and fixed to the display unit bracket.

According to another exemplary aspect of the present invention, the keypad, while being disposed on the display unit bracket, may be fixed to the display unit bracket.

According to another exemplary aspect of the present invention, the keypad coupling device may further include at least one mounting portion for fixing the keypad along an outer circumference of the display unit bracket, in which the keypad includes a bent portion bound to the mounting portion.

The bent portion may extend by being bent from the outer circumference of the keypad to surround a lateral side of the display unit bracket. The bent portion may be spaced apart from the mounting portion to form a gap therebetween.

According to another exemplary aspect of the present invention, the keypad coupling device may further include a housing coupling portion coupled to the housing on an outer side of the display unit bracket and a binding portion locked in the housing coupling portion on an inner side of the housing.

Moreover, the bent portion and the mounting portion may be seated with an interval therebetween, and after the housing and the display unit bracket are assembled to each other by locking the housing coupling portion in the binding portion, the keypad may be pushed or pulled in a certain direction (i.e. is pliant in a coupling direction) to couple the bent portion to the mounting portion.

The display unit bracket may be formed in a substantially flat shape and is coupled to close an inside of the housing.

According to another exemplary aspect of the present invention, there is provided a keypad coupling device for a portable terminal, the keypad coupling device including a terminal housing, a display unit bracket coupled to the housing, an input unit disposed on the display unit bracket to input data, and at least one coupling portion provided between the input unit and the display unit bracket to fix the input unit to the display unit bracket.

The coupling portion may include, for example, a mounting portion provided on an outer circumference of the display unit bracket and a bent portion provided in the input unit and disposed to surround the mounting portion.

The mounting portion may further include, for example, an inlet groove recessed inwardly from an outer side of the display unit bracket and a coupling protrusion protruding from the inlet groove.

The bent portion may include, for example, a bent rib which extends by being bent from an outer circumference of the input unit and is seated in the inlet groove and a binding hole formed in the bent rib and engaged with the binding protrusion.

When the input unit and the display unit bracket are sequentially mounted, the bent rib may be seated in the inlet groove and the binding hole may be spaced apart from the binding protrusion to form a gap therebetween.

After the display unit bracket is coupled to the housing, the input unit may be pushed or pulled to move the bent rib toward an inner side of the inlet groove and the binding hole may be locked by the locking protrusion such that the input unit is fixed to the display unit bracket.

The housing may include a front frame positioned on the display unit bracket, and the thickness of a frame portion of the front frame in which the input unit is positioned may be equal to the thickness of a window frame of the front frame in which a display unit is positioned.

In addition, a separation preventing portion may be further formed in the binding protrusion to prevent the binding protrusion inserted into the binding hole from leaving the binding hole.

The mounting portion may be provided on both lateral sides of the display unit bracket and the bent portion may be provided on both lateral sides of the input unit to be engaged with the mounting portion, a fixing protrusion may be formed to protrude on top and bottom sides of the display unit bracket, and a locking portion may be further formed on top and bottom sides of the input unit to be bent with multi-steps, such that the locking portion is fixed by being locked in the fixing protrusion.

According to another exemplary aspect of the present invention, a Printed Circuit Board (PCB) including a key switch may be disposed in the housing, and the input unit may include a manipulation member comprising at least one key top, an operation member transformed by manipulation with respect to the manipulation member to operate the key switch, and a binding member provided between the operation member and the manipulation member.

The bent portion may extend by being bent from an edge of the binding member to surround a lateral side of the operation member and may be spaced apart from the mounting portion.

The input unit may include a flexible material having elasticity.

According to another exemplary aspect of the present invention, there is provided a keypad coupling device for a portable terminal, the keypad coupling device including a housing, a bracket coupled to the housing, a data output device and a data input device disposed on the bracket, and a coupling portion provided on a circumference of the data input device to fix the data input device to the bracket.

### BRIEF DESCRIPTION OF THE DRAWINGS

The above and other exemplary features and advantages of an exemplary embodiment of the present invention will become more apparent to a person of ordinary skill in the art from the following detailed description taken in conjunction with the accompanying drawings, in which:
FIG. 1 is an exploded perspective view showing a portable terminal including a conventional keypad coupling device;
FIG. 2 is a rear coupling diagram showing a coupling state of a keypad shown in FIG. 1;
FIG. 3 is a perspective view showing a cross-section cut along line A-A' of FIG. 2;
FIG. 4 is a diagram showing a thickness of a side portion of a conventional front case at a display unit side and a thickness of a side portion of the front case at a keypad side;
FIG. 5 is an exploded perspective view showing a portable terminal including a keypad coupling device according to an exemplary embodiment of the present invention;
FIG. 6 is an exploded perspective view showing that a keypad and a display unit bracket shown in FIG. 5 are spaced apart from each other;
FIG. 7 is a perspective view showing a coupling state of a display unit bracket and a keypad shown in FIG. 6;
FIG. 8 is a cross-sectional perspective view showing a coupling state of a display unit bracket and a keypad shown in FIG. 7;
FIG. 9 is a cross-sectional perspective vie showing a state where a binding hole is bound to a binding protrusion by pulling or pushing a keypad when a display unit bracket and the keypad shown in FIG. 8 are coupled to each other;
FIG. 10 is a cross-sectional perspective view showing that a separation preventing portion is further formed in a binding protrusion shown in FIG. 9 for coupling;
FIG. 11 is an exploded perspective view showing main portions of a keypad according to an embodiment of the present invention; and
FIG. 12 is a diagram showing some portion of a portable terminal according to an exemplary embodiment of the present invention.

### DETAILED DESCRIPTION

Hereinafter, a keypad device for a portable terminal according to an exemplary embodiment of the present invention will be described in detail with reference to the accompanying drawings. The thicknesses of lines or sizes of components shown in the drawings may be exaggerated for clarity and convenience of the description. Terms used herein are defined for functions in the present invention and may vary according to users, intentions of operators, or practice. Thus, the terms should be defined based on the entire contents of the present invention as would be understood by a person of ordinary skill in the art.

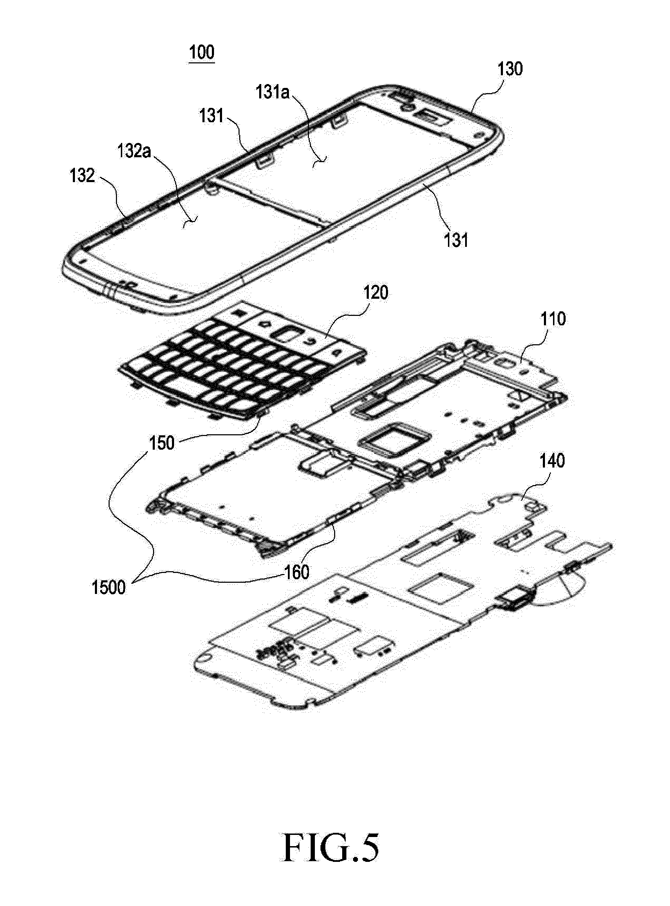

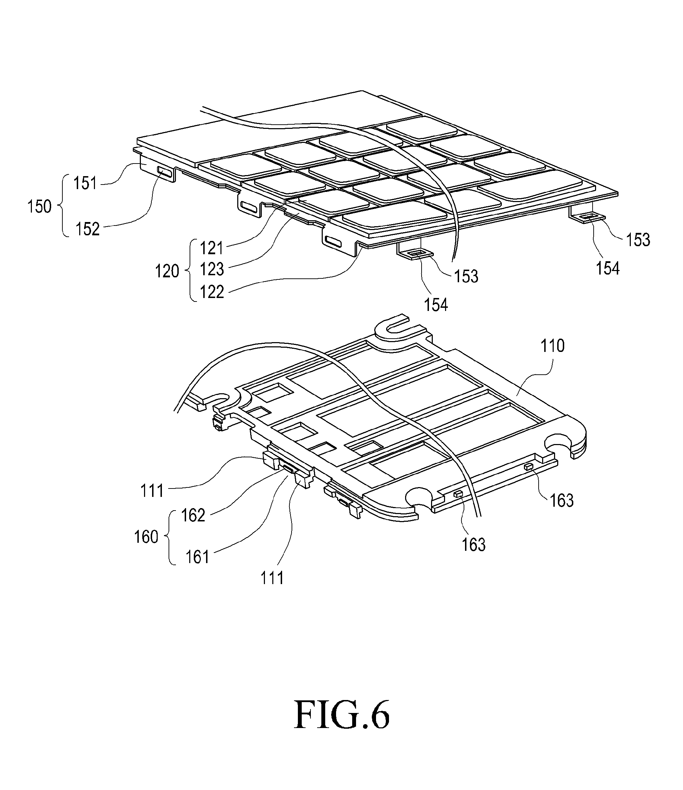

FIG. 5 is an exploded perspective view showing a portable terminal including a keypad coupling device according to an embodiment of the present invention. FIG. 6 is an exploded perspective view showing the keypad and a display unit bracket shown in FIG. 5 being spaced apart from each other.

Referring now to FIGs. 5 and 6, a portable terminal 100 according to the current embodiment of the present invention may preferably include a housing 130, a display unit 30 disposed on a front surface of the housing 130, an input unit 120, and a display unit bracket 110 on which the input unit 120 is mounted. In this example, the input unit comprises a keypad, and the display unit may comprise a touch screen that can be used to provide an auxiliary or additional input point along with the keypad.

The input unit 120, while disposed on the display unit bracket 110, is coupled and fixed to the display unit bracket 110. To this end, between the input unit 120 and the display unit bracket 110 are provided at least one coupling portions 1500 that preferably engage to affix the input unit 120 to the display unit bracket 110. The coupling portions 1500 and include a mounting portion 160 for fixing the input unit 110 along the outer circumference of the display unit bracket 110 and a bent portion 150 provided in the input unit 120 to be bound to the mounting portion 160.

In the current exemplary embodiment, the input unit 120 is a device for inputting data, and the input unit 120 may be provided separately from or as one piece with a data output device (e.g., including the display unit 30). The input unit 120 may include a keypad. In the current exemplary embodiment, a keypad will be used as an example of the input unit 120. The keypad 120 may generate an input signal according to a user's pressing a key top or a keypad for generating a signal by recognizing a user's touch action with a touch sensor. However, the input unit 120 according to the present invention is not limited to such an example, and a plurality of modifications of various types can be made as long as they allow generation of a signal through data input.

With continued reference to FIG. 5, the housing 130 includes a front frame 130 in which openings 131a and 132a are formed, and the openings 131a and 132a for exposing the display unit 30 or the keypad 120 on a front surface thereof. The inside of the front frame 130 is closed by mounting onto the display unit bracket 110. To the front frame 130 can be coupled a rear case (not shown). Between the front frame 130 and the rear case are preferably provided the keypad 120, the display unit 30, the display unit bracket 110, a Printed Circuit Board (PCB) 140, and so forth. The display unit 30 and the keypad 120 are coupled to the PCB 140 provided under the display unit bracket 110, and the display bracket 110, the keypad 120, and the PCB 140 are coupled to the front frame 130. A receiving unit (not shown) is provided above the display unit 30 and a transmitting unit (not shown) is provided below the keypad 120. In the current exemplary embodiment, the portable terminal 100 is described as a bar-type terminal, but it is not limited thereto and a keypad coupling device according to the current embodiment of the present invention can be installed in any type of a terminal such as a folder-type terminal, a slide-type terminal, etc., as long as the terminal includes the keypad 120. For example, a slide-type terminal may be structured such that the separate housing 130 is coupled to a rear surface of the housing 130 to slidably move. In this case, the keypad 120 and the display unit bracket 110 according to the current exemplary embodiment of the present invention may be installed under the display unit 30 of the upper housing 130 and a rear housing, respectively, or the display unit 30 may be provided on the front housing 130 and the keypad 120 and the display unit bracket 110 according to the current exemplary embodiment may be provided on the rear housing.

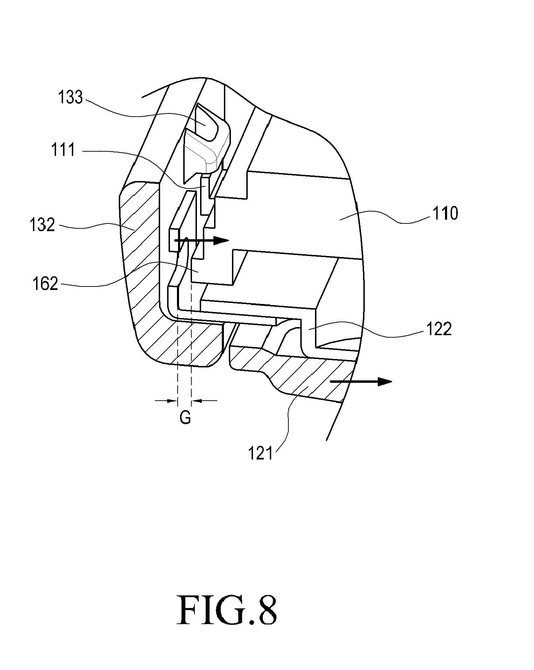

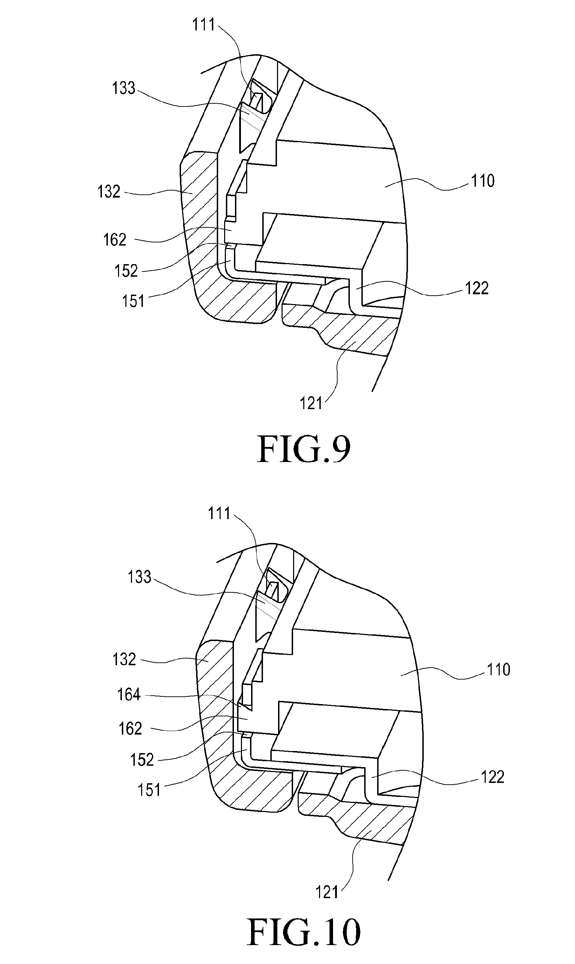

The front frame 130 preferably includes, in an inner side thereof, a binding portion 133 to be engaged with a housing coupling portion 111 provided on the outer circumference of the display bracket 110 (see FIGs. 9 and 10). The front frame 130 is disposed along the outer circumference of the display unit bracket 110 on which the keypad 120 is seated, and the housing coupling potion 111 is bound to the binding portion 133(see FIG. 8 and FIG. 9) such that the display unit bracket 110 is fixed to the inner side of the front frame 130.

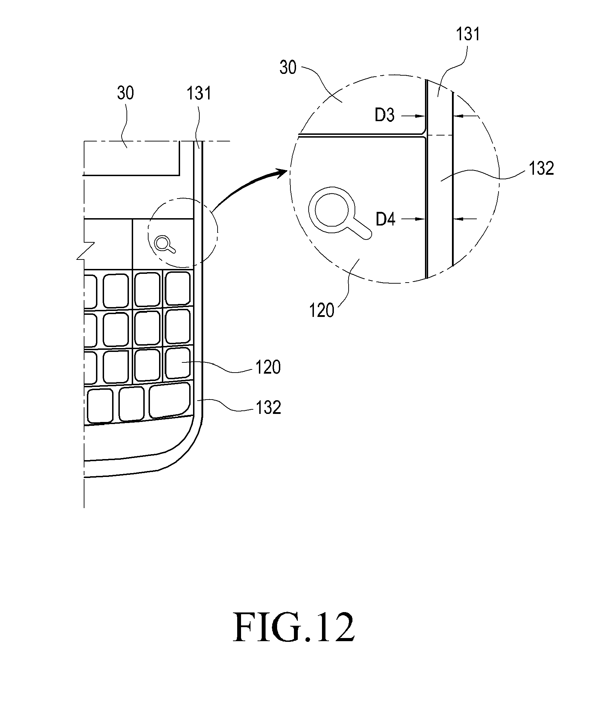

In particular, by means of a coupling structure arranged between the keypad 120 and the display unit bracket 110 in the current embodiment, thicknesses D3 and D4 of a side portion of the front frame 130 may be formed uniform (see FIG. 12). In other words, the thickness D3 of the window frame 131 on the opening 131a in which the display unit 30 is to be mounted and the thickness of D4 of the keypad frame 132 on the opening 132 in which the keypad 120 is to be mounted are equal to each other. If the thickness D3 of the window frame 131 has a minimum value by maximizing the size of the display unit 30 included in the portable terminal 100, the thickness D4 of the keypad frame 132 also has a minimum value which may be equal to the thickness D3 of the window frame 131, that is, D3=D4. Thus, various modifications may be possible in the designing stage, and unity of the design can be guaranteed together with the elegant external design.

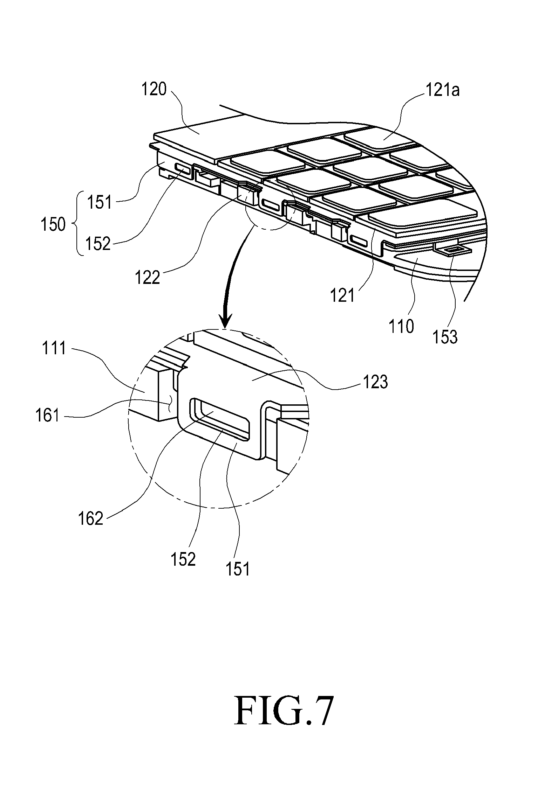

Referring now to FIG. 7, which is a perspective view showing a coupling state of the display unit bracket 110 and the keypad 120 shown in FIG. 6, and an enlargement of the attachment of the keypad unit 2 and the display bracket 110. FIG. 8 is a cross-sectional perspective view showing a coupling state of the display unit bracket 110 and the keypad 120 shown in FIG. 7, and FIG. 9 is a cross-sectional perspective view showing a state where a binding hole 152 is bound to a binding protrusion 162 by pulling or pushing the keypad 120 when the display unit bracket 110 and the keypad 120 shown in FIG. 8 are coupled to each other.

Referring now to FIGs. 7 through 9, the display unit bracket 110 is provided on a top surface of the PCB 140 in the inner side of the front frame 130. On the display unit bracket 110 are positioned the display unit 30 and the keypad 120 (see FIG. 5). The display unit bracket 110 is coupled with the front frame 130 as one piece to close off the inside of the front frame 130.

As shown in FIG. 6, along the outer circumference of the display unit bracket 110 are provided the mounting portion 160 and the housing coupling portion 111. The mounting portion 160 includes an inlet groove 161 and the binding protrusion 162 formed to protrude in the inner side of the inlet groove 161. The housing coupling portion 111 is mounted in the binding portion 133 of the front frame 130, and the housing coupling portion 111 is formed adjacent to the inlet groove 161. In the current exemplary embodiment, the housing coupling portion 111 is formed in the shape of a hook oriented toward the front frame 130, and the binding portion 133 is formed in the shape of a hole to be coupled or uncoupled with the hook-shaped housing coupling portion 111. However, a person of ordinary skill in the art should understand and appreciate that the presently claimed invention is not limited to the aforementioned shapes, and various modifications are possible such that they may comprise any shape as long as the display unit bracket 110 and the front frame 130 can be coupled or uncoupled with each other.

In the inlet groove 161 is mounted a bent rib 151 of the keypad 120 as will be described below. A plurality of inlet grooves 161 are formed adjacent to each other along the outer circumference of the display unit bracket 110 in such positions that they are designed for engagement with the bent ribs 151. The inlet groove 161 is recessed inwardly from the outer circumference of the display unit bracket 110. Once the keypad 120 is positioned on the display unit bracket 110, the bent rib 151 is seated in the inner side of the inlet groove 161. In the current exemplary embodiment, the inlet groove 161 is provided on both lateral sides of the display unit bracket 110, and fixing protrusions 163 protrude toward the keypad 120 are formed on top and bottom sides of the display unit bracket 110 to be coupled with locking portions 153 to be described below. However, a coupling structure for coupling the keypad 120 to the display unit bracket 110 according to the presently claimed invention is not limited to the aforementioned example, and various modifications are possible such that the inlet grooves 161 may be provided, for example, on top, bottom, left, and right sides of the display unit bracket 110 along the outer circumference of the display unit bracket 110 to allow the bent ribs 151 of the keypad 120 to be coupled therewith.

The binding protrusion 162 is formed in the inner side of the inlet groove 161 to protrude toward the bent rib 151. The maximum protruding length of the binding protrusion 162 is shorter than a length from an inner end portion of the inlet groove 161 to an outer end portion of the inlet groove 161. In this case, when the keypad 120 is seated on the display unit bracket 110 and the bent rib 151 is positioned in the inner side of the inlet groove 161, the binding hole 152 is spaced apart from the binding protrusion 162, thus forming a gap G (as shown in FIG. 8). Thus, when the display unit bracket 110, the keypad 120, and the front frame 130 are coupled, interference originating from the coupling is prevented among their components, assembly is made easy, and a space required for the coupling between the keypad 120 and the display unit bracket 110 can be minimized.

FIG. 10 is a cross-sectional perspective view showing that a separation preventing portion 164 is further formed in the binding protrusion 162 shown in FIG. 9 for coupling. Referring now to FIG. 10, the binding protrusion 162 may further include the separation preventing portion 164 for preventing the binding protrusion 162 inserted into the binding hole 152 from leaving the binding hole 152. The separation preventing portion 164 is a component for improving a binding force between the binding hole 152 and the binding protrusion 162. In other words, when the binding hole 152 and the binding protrusion 162 are fixed by being locked to each other, a coupling force between the binding hole 152 and the binding protrusion 162 is maintained due to coupling between the front frame 130 and the display unit bracket 110 and space constraints between the front frame 130 and the display unit bracket 110. In addition, the separation preventing portion 164 previously prevents the coupling between the binding hole 152 and the binding protrusion 162 from being released due to a user's environment or the like, and improves the coupling force between the binding hole 152 and the binding protrusion 162. In the current exemplary embodiment, the separation preventing portion 164 has a shape extending inclinedly toward the PCB 140 from a cross-sectional portion of the binding protrusion 162, but the shape of the separation preventing portion 164 is not limited to that example, and various modifications are possible and within the spirit and scope of the claimed invention in the shape thereof as long as the separation preventing portion 164 allows the binding protrusion 162 to be kept inserted into the binding hole 152.

The keypad 120 preferably includes a plurality of key tops 121a and the bent portion 150, and is positioned on the display unit bracket 110 (see FIGs. 5 through 9). In the current exemplary embodiment, the keypad 120 is made of a flexible material having elasticity, but it is not limited to this example, and various modifications may be possible in the material thereof as well as the flexible material having elasticity as long as the keypad 120 can move the bent portion 150 toward the display bracket 110 when being pushed or pulled in a certain direction after the display unit bracket 110 having the keypad 120 seated thereon is coupled to the front frame 130.

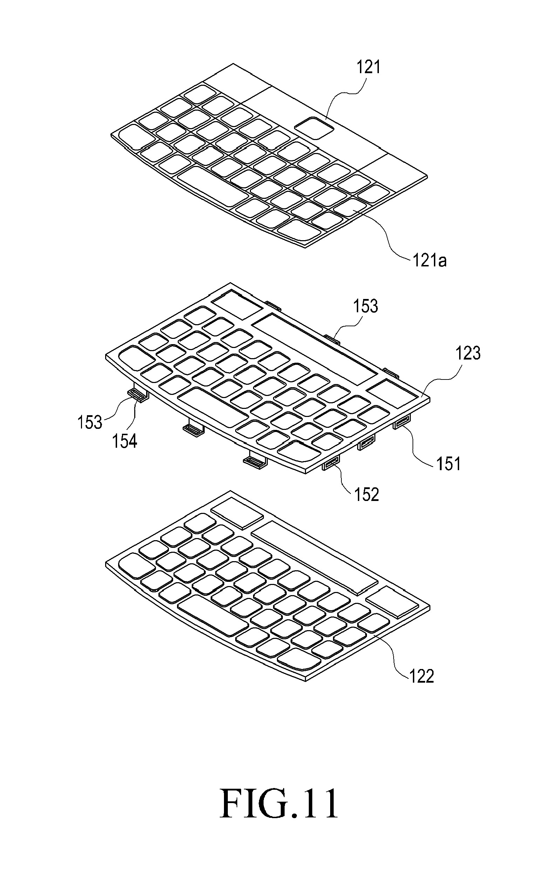

FIG. 11 is an exploded perspective view showing main portions of the keypad 120 according to an exemplary embodiment of the present invention. Referring to FIG. 11, in the current exemplary embodiment, the keypad 120 may include an operation member 122, a binding member 123, and a manipulation member 121 which are disposed on the PCB 140 disposed in the housing 130 specifically front frame 130. However, the keypad 120 is not limited to that example. For example, if a touch sensor is arranged in place of a key switch to generate a signal, the keypad 120 may be in a single flat plate and in this case, the bent portion 150 may be formed at an edge of the flat-plate keypad 120. As such, various modifications may be possible in the structure of the keypad 120 as long as the keypad 120 includes the plurality of key tops 121a and allows the PCB 140 to recognize an input from the key top 121a.

The manipulation member 121 among the operation member 122, the binding member 123, and the manipulation member 121 is made of the flexible material having elasticity, and the manipulation member 121 preferably includes the plurality of key tops 121a. The binding member 123 is disposed between the manipulation member 121 and the operation member 122. In the current embodiment, the bent portion 150 extends by being bent from an edge of the binding member 123, but the presently claimed invention is not limited to this example. For example, the bent portion 150 may be formed as one piece with the manipulation member 121 having the key tops 121a, such that it extends by being bent along an edge of the manipulation member 121. In this way, various modifications may be possible as long as any component of the keypad 120 extends by being bent toward the display unit bracket 110. The operation member 122 is transformed according to manipulation with respect to the manipulation member 121 to operate a key switch (not shown) disposed on the PCB 140. While the key switch is not shown, a plurality of key switches, for example, in a dome-switch shape, are disposed on the PCB 140 to correspond to the operation member 122. Moreover, the key switch is manipulated according to transformation of the manipulation member 121. The operation member 122 may be made of an elastic material such as silicon, urethane, rubber, etc., to be transformed according to manipulation with respect to the manipulation member 121.

The bent portion 150 is bent toward the display unit bracket 110 along the edge of the keypad 120. When the front frame 130, the keypad 120, and the display unit bracket 110 are sequentially assembled in that order, the bent portion 150 is spaced apart from the outer circumference of the display unit bracket 110 to form the gap G (see FIG. 8). In the current exemplary embodiment, the plurality of bent portions 150 are provided adjacent to each other on both lateral sides of the outer circumference of the keypad 120 the plurality of locking portions 153 are formed adjacent to each other on top and bottom sides of the outer circumference of the keypad 120 to be engaged with the fixing protrusions 163. However, the present invention is not limited to this structure, and for example, the bent portions 150 may be formed on all of the top, bottom, left and right sides of the keypad 120. As such, various modifications may be possible in the shapes of the bent portions 150 and the locking portions 153 as long as such shapes can reduce a space for coupling with the display unit bracket 110 on the both lateral sides of the keypad 120. The locking portions 153 are provided along the outer circumference of the keypad 120 on the top and bottom sides of the keypad 120. The locking portion 153 is in the shape of 'L' such that it is bent downwardly from the keypad 120 toward the display unit bracket 110 with multi-steps. On a surface of the multi-step bent locking portion 153 is formed a hole 154 to be coupled with the fixing protrusion 163.

The bent portion 150 includes the bent rib 151 and the binding hole 152. The bent rib 151 extends by being bent toward the display unit bracket 110 from the outer circumference of the keypad 120, thus being positioned in the inner side of the inlet grove 161 of the display unit bracket 110. In particular, the bent rib 151 extends by being bent from the edge of the binding member 123 to surround the side of the operation member 122 and the outer circumference of the display unit bracket 110.

The binding hole 152 is formed to perforate the bent rib 151, and when the keypad 120 is placed on the display unit bracket 110, the binding hole 152 is spaced apart from the binding protrusion 162, thus forming the gap "G" (FIG. 8) of a predetermined interval, such that they face each other.

FIG. 12 is a diagram showing a portion of a portable terminal according to an exemplary embodiment of the present invention. Referring now to FIG. 12, when the display unit bracket 110 having the keypad 120 seated thereon is coupled to the front frame 130, the gap G of the predetermined interval is formed between the binding hole 152 and the binding protrusion 162 (see FIG. 8). In this state, when the keypad 120 is pushed or pulled in a particular direction, the binding hole 152 is coupled to the binding protrusion 162 (see FIG. 9) and the binding hole 152 is fixed while being coupled to the binding protrusion 162 due to the elasticity of the keypad 120 and a space with or friction against the front frame 130.

With particular reference to FIG. 12 from the front surface of the portable terminal 100 in which coupling is made as described above, it can be seen that the thickness D3 of the window frame 131 at the side of the display unit 30 of the front frame 130 and the thickness D4 of the keypad frame 132 at the side of the keypad 120 of the front frame 130 are equal to each other.

In an assembly process of the portable terminal 100 structured as described above, the keypad 120 is seated on the display unit bracket 110. At this time, the bent portion 150 is placed in a shape covering the outer circumference of the display unit bracket 110. In other words, the bent rib 151 is positioned in the inner side of the inlet groove 161 and the binding hole 152 is spaced apart from the binding protrusion 162 by the predetermined interval, thus forming the gap G. The fixing protrusions 163 are engaged with the locking portions 153 on the top and bottom sides of the keypad 120.

Once the front frame 130 is placed on the display unit bracket 110 after assembly of the display unit bracket 110 and the keypad 120, the binding portion 133 provided in the inside of the front frame 130 is engaged with the housing coupling portion 111 provided on the outer circumference of the display unit bracket 110 such that the display unit bracket 110 and the front frame 130 are fixed.

Thereafter, if the left side of the keypad 120 is pulled or pushed to the right and the right side of the keypad 120 is pulled or pushed to the left (see arrows shown in FIG. 8), the bent ribs 151 provided on the both lateral sides of the keypad 120 move toward the inner sides of the inlet grooves 161 and the binding protrusions 162 are locked and fixed in the binding hole 152. In this state, the binding holes 152 are kept locked by the binding protrusions 162 due to coupling between the front frame 130 and the display unit bracket 110, a limited space between the front frame 130 and the display unit bracket 110, and friction between the front frame 130 and the display unit bracket 110. Therefore, the keypad 120 is fixed in the display unit bracket 110, and the front frame 130, the keypad 120, and the display unit bracket 110 maintain the fixed state.

In the current exemplary embodiment, the display unit 30 and the keypad 120 are provided separately, but they are not limited to these examples. For example, in a bar-type terminal such as a recent smart phone, a data input/output device in which data input and output devices are integrated is provided in a single flat-plate display device, and the bracket 110 formed as one piece with a housing is provided in the housing. Coupling portions 150 and 160 (such as the bent portion 150 and the mounting portion 160) are provided on the circumference of the data input/output device 120 (such as the keypad 120) to fix the data input/output device to the bracket 110. As can be seen in this example, the keypad 120 comprises a bent portion 150 substantially orthogonal to a planar surface of the keypad 120 that is bound to the mounting portion 160 of the display unit 110 bracket.

The current exemplary embodiment may facilitate assembly of the portable terminal 100 and make a coupling space between the keypad 120 and the both lateral sides of the display unit bracket 110 small, thereby reducing the thickness of the front frame 130. Moreover, as shown in FIG. 12, the thickness D3 of the window frame 131 and the thickness D4 of the keypad frame 132 are equal to each other, thereby diversifying the design of the front frame 130.

The keypad of the portable terminal structured as described above can minimize the thickness of the outer frame of the housing by being coupled to the display unit bracket.

In addition, the keypad extending by being bent from the edge of the keypad is seated in a way to surround the mounting portion of the display unit bracket, thereby preventing generation of interference due to the bent portion or the mounting portion when the keypad, the bracket, and the housing are coupled, and facilitating assembly.

Owing to the bent portion and the mounting portion, a space for mounting the keypad on the housing is not separately required and the thickness of a space occupied by the bent portion and the mounting portion can be minimized.

Moreover, according to the present invention, by minimizing the thickness of the keypad frame in which the keypad is provided, the thickness of the window frame and the thickness of the keypad frame can be made equal to each other.

By making the thickness of the front frame uniform, the manufacturing of the front frame is made easier than known heretofore and various shapes can be implemented in designing the front frame, improving elegance of the portable terminal and adding the luxury feature to the portable terminal.

Furthermore, the area of the keypad mounted in the same housing may be larger than that of a conventional keypad, such that a larger space may be secured to mount the key tops.

By pushing or pulling the keypad in a certain direction after mounting the display bracket having the keypad seated thereon in the housing, the keypad is fixed in the display unit bracket, thus facilitating assembly of the portable terminal.

While the invention has been shown and described with reference to an exemplary embodiment thereof, it will be understood by those skilled in the art that various changes in form and details may be made therein without departing from the scope of the invention as defined by the appended claims and their equivalents.

## Claims

1. A keypad coupling device for a portable terminal 100 which comprises:
a housing; and
a display unit bracket (110) coupled to the housing, wherein the keypad (120) is coupled with and fixed to the display unit bracket (110).

2. The keypad coupling device of claim 1, **characterized in that** the keypad 120, is disposed on and fixed to the display unit bracket (110).

3. The keypad coupling device of claim 2, further comprising at least one mounting portion (160) for fixing the keypad (120) along an outer circumference of the display unit bracket 110, **characterized in that** the keypad (120) comprises a bent portion (150) substantially orthogonal to a planar surface of the keypad (120) that is bound to the mounting portion (160) of the display unit (110) bracket.

4. The keypad coupling device of claim 3, **characterized in that** the bent portion (150) extends from the outer circumference of the keypad (120) to surround a lateral side of the display unit bracket (110).

5. The keypad coupling device of claim 4, **characterized in that** the bent portion (150) is spaced apart from the mounting portion (160) to form a gap therebetween.

6. The keypad coupling device of claim 5, further comprising:
a housing coupling portion (111) coupled to the housing on an outer side of the display unit bracket (110); and
a binding portion (133) locked in the housing coupling portion (111) on an inner side of the housing (130).

7. The keypad coupling device of claim 5, **characterized in that** the bent portion (150) and the mounting portion (160) are seated with an interval therebetween, and the after the housing and the display unit bracket (110) are engaged to each other when assembled by locking the housing coupling portion (111) in the binding portion (133), wherein the keypad (120) is in a coupling direction to couple the bent portion (150) to the mounting portion (160).

8. The keypad coupling device of claim 1, **characterized in that** the display unit bracket (110) is substantially in a flat shape and is coupled to close off an inside of the housing.

9. A keypad coupling device of claim 2, further comprising an input unit (120) to input data being disposed on the display unit bracket (110) ; and
at least one coupling portion (150) provided between the input unit (120) and the display unit bracket (110) to affix the input unit (120) to the display unit bracket (110).

10. The keypad coupling device of claim 9, **characterized in that** the coupling portion (150) comprises a mounting portion (160) provided on an outer circumference of the display unit bracket (110); and a bent portion (150) provided in the input unit (120) and disposed to surround the mounting portion (160),
**characterized in that** the mounting portion (160) comprises an inlet groove (161) recessed inwardly from an outer side of the display unit bracket (110); and a binding protrusion (162) protruding from the inlet groove (161),
**characterized in that** the bent portion (150) comprises a bent rib (151) which extends from an outer circumference of the input unit (120) and is seated in the inlet groove (161); and a binding hole (152) formed in the bent rib (151) and engaged with the binding protrusion (162).

11. The keypad coupling device of claim 10, **characterized in that** the input unit (120) and the display unit bracket (110) are engaged with each other when mounted, wherein the bent rib (151) is seated in the inlet groove (161) and the binding hole (152) is spaced apart from the binding protrusion (162) to form a gap therebetween, and
**characterized in that** after the display unit bracket (110) is coupled to the housing (130), the input unit (120) is pushed or pulled to move the bent rib (151) toward an inner side of the inlet groove (161) and the binding hole (162) is locked by the locking protrusion (153) such that the input unit (120) is fixed to the display unit bracket (110).

12. The keypad coupling device of claim 11, **characterized in that** the housing (130) comprises a front frame (130) positioned on the display unit bracket (110), and the thickness D4 of a keypad frame (132) of the front frame (130) in which the input unit (120) is positioned is equal to the thickness D3 of a window frame (131) of the front frame (130) in which a display unit (30) is positioned.

13. The keypad coupling device of claim 10, **characterized in that** a separation preventing portion (164) is further formed in the binding protrusion (162) to prevent the binding protrusion (162) inserted into the binding hole (152) from leaving the binding hole (152).

14. The keypad coupling device of claim 10, **characterized in that** the mounting portion (160) is provided on both lateral sides of the display unit bracket (110) and the bent portion (150) is provided on both lateral sides of the input unit (120) to be engaged with the mounting portion (160), a fixing protrusion (163) is formed to protrude on top and bottom sides of the display unit bracket (110), and a locking portion (153) is further formed on top and bottom sides of the input unit (120) to be bent with multi-steps, such that the locking portion (153) is fixed by being locked in the fixing protrusion (163).

15. The keypad coupling device of claim 10, **characterized in that** a Printed Circuit Board (PCB) (140) comprising a key switch is disposed in the housing (130), and the input unit (120) comprises a manipulation member (121) comprising at least one key top (121a); an operation member (122) transformed by manipulation with respect to the manipulation member (121) to operate the key switch; and a binding member (123) provided between the operation member (121) and the manipulation member (122), and
**characterized in that** the bent portion (150) extends by being bent from an edge of the binding member (123) to surround a lateral side of the operation member (122) and is spaced apart from the mounting portion (160).
